Europäisches Patentamt

European Patent Office

Office européen des brevets

(11) Publication number: **0 352 792 B1**

# EUROPEAN PATENT SPECIFICATION

(45) Date of publication of patent specification: **02.03.94** (51) Int. Cl.5: **G02F 1/137**

(21) Application number: **89113885.1**

(22) Date of filing: **27.07.89**

(54) **Liquid crystal device.**

(30) Priority: **29.07.88 JP 190269/88**
     **14.10.88 JP 258815/88**

(43) Date of publication of application:
     **31.01.90 Bulletin 90/05**

(45) Publication of the grant of the patent:
     **02.03.94 Bulletin 94/09**

(84) Designated Contracting States:
     **CH DE FR GB LI**

(56) References cited:
     **EP-A- 0 174 541**
     **US-A- 4 084 884**

     **PROCEEDINGS OF THE SID, vol. 22, no. 4,
     1981, pages 297-299, IEEE, Los Angeles, CA,
     US; R.L. HUBBARD et al.: "Optical-bounce
     removal and turnoff-time reduction in twist-
     ed-nematic displays"**

     **MOLECULAR CRYSTALS AND LIQUID CRY-
     STALS, vol. 108, nos. 3/4, 1984, pages
     339-348, Gordon and Breach, Science Pub-
     lishers, Inc., New York, US; S. SHIKATA et al.:
     "The effects of material constants and de-
     vice parameters on electrooptic characteris-
     tics of liquid crystal devices"**

(73) Proprietor: **CASIO COMPUTER COMPANY
     LIMITED
     6-1, 2-chome, Nishi-Shinjuku
     Shinjuku-ku Tokyo 160(JP)**

(72) Inventor: **Yoshida, Tetsushi Pat. Dep. Dev.
     Div. Hamura R&D
     Center
     CASIO COMPUTER CO., LTD.
     3-2-1, Sakae-cho
     Hamura-machi Nishitama-gun Tokyo,
     190-11(JP)**
     Inventor: **Kojima, Ken Pat. Dep. Dev. Div.
     Hamura R&D
     Center
     CASIO COMPUTER CO., LTD.
     3-2-1, Sakae-cho
     Hamura-machi Nishitama-gun Tokyo,
     190-11(JP)**
     Inventor: **Itakura, Mikiya Pat. Dep. Dev. Div.
     Hamura R&D
     Center
     CASIO COMPUTER CO., LTD.
     3-2-1, Sakae-cho
     Hamura-machi Nishitama-gun Tokyo,
     190-11(JP)**

**MOLECULAR CRYSTALS AND LIOUID CRY-STALS & LETTERS, vol. 123, nos. 1/4, 1985, pages 15-55, Gordon and Breach, Science Publishers, Inc., New York, US; T. UCHIDA: "Application and device modeling of liquid crystal displays"**

**PATENT ABSTRACTS OF JAPAN, vol. 6, no. 203 (P-148)[1081], 14th October 1982; & JP-A-57 109 920**

Inventor: **Mawatari, Atsushi Pat. Dep. Dev. Div. Hamura R&D Center CASIO COMPUTER CO., LTD. 3-2-1, Sakae-cho Hamura-machi Nishitama-gun Tokyo, 190-11(JP)**
Inventor: **Aoki, Toshihiro Pat. Dep. Dev. Div. Hamura R&D Center CASIO COMPUTER CO., LTD. 3-2-1, Sakae-cho Hamura-machi Nishitama-gun Tokyo, 190-11(JP)**

(74) Representative: **Patentanwälte Grünecker, Kinkeldey, Stockmair & Partner Maximilianstrasse 58 D-80538 München (DE)**

**Description**

The present invention relates to a nematic liquid crystal device.

A liquid crystal display device is widely used as a dot-matrix display device in a television set, a wordprocessor, a terminal for a personal computer, and the like. The dot-matrix liquid crystal display device includes a simple matrix type and an active matrix type. In the simple matrix type display device, each of intersections of a plurality of electrodes aligned in row and column directions through a liquid crystal material is used as one pixel. In the active matrix type display device, active elements are arranged in correspondence with pixels.

The dot-matrix type liquid crystal display device is required to have a large screen and an improved resolution. For this reason, there are a very large number of pixels arranged in one display device. Along with an increase in the number of pixels, a recent liquid crystal display device is required to be able to be high duty multiplex driven.

As a display device for displaying motion pictures like a television set, a TN (Twisted Nematic) type liquid crystal display device (to be referred to as a TN-LCD) having a relatively short response time and a relatively high contrast is used.

The TN-LCD has a pair of substrates, and a nematic liquid crystal material sealed between the substrates. In this nematic liquid crystal material, the directions of the molecular axes of molecules are aligned to be gradually twisted between the two substrates. The simple matrix type liquid crystal display device is arranged as follows.

A pair of substrates which are arranged to oppose each other at a predetermined interval are adhered to each other by a seal member. A large number of stripe transparent scanning electrodes are formed on the inner surface of one of these substrates, e.g., an input-side substrate (lower substrate). A large number of stripe transparent signal electrodes perpendicular to the scanning electrodes are formed on the inner surface of an output-side substrate (upper-substrate). An aligning film subjected to an aligning treatment by, e.g., rubbing is formed on the inner surface of each substrate. A nematic liquid crystal material is sealed between the two substrates. An optical active substance (e.g., a chiral liquid crystal material) is mixed in the liquid crystal material so that liquid crystal molecules are twist-aligned. The directions of liquid crystal molecules near the aligning films are regulated by the aligning films, so that the liquid crystal molecules are twist-aligned between the substrates. A pair of polarizing plates are disposed on the outer surfaces of the substrates.

To the liquid crystal material used in the TN-LCD, (1) a chiral liquid crystal material of levorotatory (counterclockwise rotatory polarization with respect to a propagation direction of light passing through the liquid crystal display device) is added so that liquid crystal molecules are aligned to be twisted counter-clockwise from the input-side substrate toward the output-side substrate, or (2) a chiral liquid crystal material having dextrorotatory is added, so that liquid crystal molecules are aligned to be twisted clockwise. In a conventional liquid crystal display device, an aligning treatment direction of the output-side substrate (that of the aligning film) is rotated through about 90° in a direction opposite to the twisting direction of the alignment of the liquid crystal molecules with respect to the aligning treatment direction of the input-side substrate, so that the liquid crystal molecules are aligned to be twisted at a uniform angle (tilt angle). The directions of polarization axes of the input- and output-side polarizing plates are determined in accordance with the aligning treatment direction of the input-side substrate.

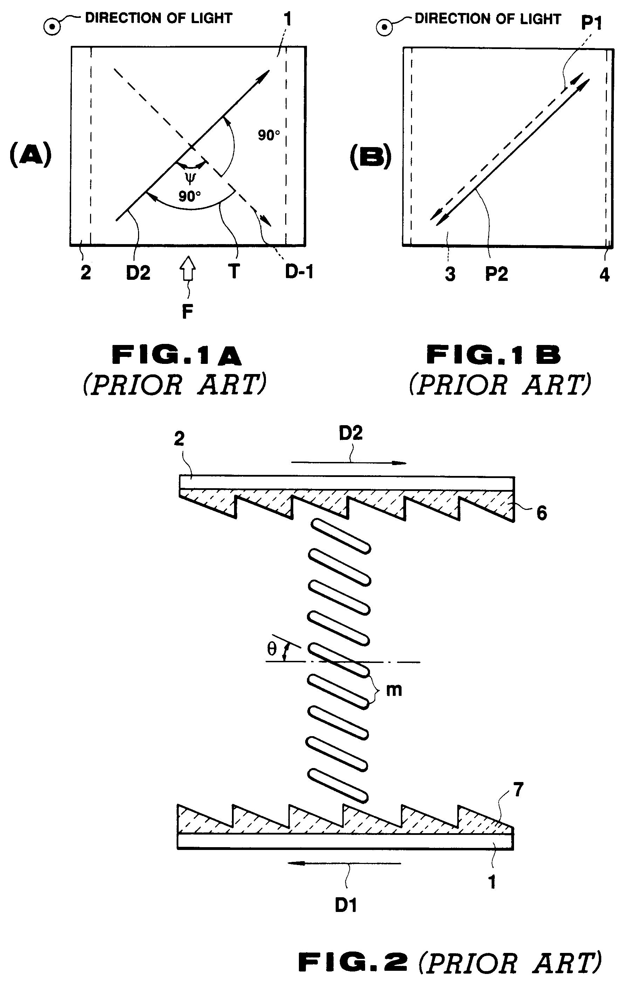

Figs. 1A and 1B show the aligning treatment directions of substrates 1 and 2, the twisting direction of alignment of the liquid crystal molecules, and the directions of the polarization axes of polarizing plates 3 and 4. Figs. 1A and 1B show a liquid crystal display device in which liquid crystal molecules are aligned to be twisted counterclockwise from the input-side substrate 1 toward the output-side substrate 2. In Fig. 1A, reference symbol D1 denotes an aligning treatment direction of the input-side substrate; D2, an aligning treatment direction of the output-side substrate; and T, a twisting direction of the alignment of the liquid crystal molecules. In Fig. 1A, the aligning treatment direction D1 of the input-side substrate corresponds to an obliquely right lower direction at an angle of about 45° with respect to the edge of the liquid crystal display device, and the aligning treatment direction D2 of the output-side substrate corresponds to a direction obtained by rotating the aligning treatment direction D1 of the input-side substrate through about 90° in a direction opposite to the twisting direction T of the alignment of the liquid crystal molecules. The liquid crystal molecules are aligned on the surface of the input-side substrate so that their molecular axes are directed in the aligning treatment direction D1, and are aligned on the surface of the output-side substrate so that they are directed in the aligning treatment direction D2. Liquid crystal molecules are aligned to be twisted counterclockwise at a twist angle $\psi$ of about 90° due to their levorotatory from the input-side substrate toward the output-side substrate (when the drawing is viewed from the rear side). In

3

Fig. 1A, an arrow F indicates a viewing angle position of the liquid crystal display device. The viewing angle position F of this TN-LCD is present at one edge side of the TN-LCD. In Fig. 1B, P1 indicates the direction of a polarization axis (or direction of a transmission axis or absorption axis) of the input-side polarizing plate 3, and P2 indicates the direction of a polarization axis (or direction of a transmission axis or absorption axis) of the output-side polarizing plate 4. The direction P1 of the polarization axis of the polarizing plate 3 is set in a direction almost perpendicular to the aligning treatment direction D1 of the input-side substrate 1. The direction P2 of the polarization axis of the output-side polarizing plate 4 is set to be almost parallel to the direction P1 of the polarization axis of the input-side polarizing plate. This TN-LCD is a negative display type liquid crystal display device for displaying a television image or the like.

Fig. 2 shows an alignment state of liquid crystal molecules in the conventional liquid crystal display device. In the liquid crystal display device in which the aligning treatment direction D2 of an aligning film 6 of the output-side substrate 2 is rotated in a direction opposite to the twisting direction of the alignment of the liquid crystal molecules with respect to the aligning treatment direction D1 of an aligning film 5 of the input-side substrate 1, liquid crystal molecules $\underline{m}$ between the substrates 1 and 2 are aligned at a uniform tilt angle $\theta$, as shown in Fig. 2, and are twisted at about 90° in this state.

The above-mentioned TN-LCD has a short response time, and a relatively high contrast. For this reason, the TN-LCD is widely used as various display devices. However, when the number of time-divisions is increased, an operation margin is decreased and the contrast is lowered. Furthermore, a viewing angle is narrowed. These degradations in characteristics are caused by poor sharpness of threshold characteristics of the TN-LCD (i.e., a ratio of a change in luminance with respect to a change in application voltage; to be referred to as $\gamma$ characteristics hereinafter). In order to improve the $\gamma$ characteristics, a technique for increasing a twist angle is proposed. A superbirefringence effect liquid crystal display device in which a twist angle is set to fall within the range of 180° to 360° (to be referred to as an SBE-LCD hereinafter) is disclosed in U.S.P. Nos. 4,697884 and 4,634,229. However, the SBE-LCD has good $\gamma$ characteristics but has a long response time since its twist angle is large. Since the SBE-LCD utilizes the birefringence effect, a display is undesirably colored. For this reason, the SBE-LCD is not suitable for displaying motion pictures, and is not suitable for color display, either.

In order to eliminate the drawback of the SBE-LCD, a technique for decreasing a retardation $\Delta n \cdot d$ of the LCD (a product of an optical anisotropy $\Delta n$ and the thickness d of a liquid crystal layer) is also proposed. The liquid crystal display device is disclosed in Appl. Phys. tett. 50(5), 2 February, 1987 by M.Schadt and F.Leenhouts as an optical mode interference effect type liquid crystal device (to be referred to as an OMI-LCD hereinafter).

Since the OMI-LCD has a small light transmission amount when it is ON, the $\gamma$ characteristics deteriorate, a display is dark and a viewing angle is narrow.

In order to eliminate the drawbacks of the above-mentioned LCDs, a liquid crystal display device in which liquid crystal molecules of a liquid crystal material sealed between substrates are aligned in a splay manner is disclosed in Japanese Patent Disclosure No. 62-80621 (to be referred to as JP62-80621 hereinafter). However, the liquid crystal display device disclosed in JP62-80621 does not have a sufficiently high contrast, and is not suitably used for a display device for displaying motion pictures.

Attempts have been made to obtain a display device suitable for time-divisional driving by improving physical characteristics of a nematic liquid crystal material sealed between substrates in the TN-LCD. The improved TN-LCD is filed as U.S. Ser. Nos. 259,045 and 258,176 by the present inventors. However, a sufficiently high contrast cannot be obtained by improving only the nematic liquid crystal material. From US-PS 4 084 884 a liquid cristal device with the features of the first part of claim 1 is known

The present invention has been made in consideration of the above situation, and has as its object to provide a liquid crystal display device which can have sharp threshold characteristics without prolonging a response time, and can obtain a good contrast and a wide viewing angle when high duty multiplex driving is performed.

The object is solved by the liquid cristal device having the features of claim 1 The liquid crystal device comprises:

a first substrate on which a plurality of first electrodes are arrayed;

a second substrate disposed to be separated from said first substrate at a predetermined gap and having at least one second electrode arranged to oppose said first electrodes;

first aligning means, provided on a surface of said first substrate on which said first electrodes are formed and surfaces of said first electrodes, for aligning axes of liquid crystal molecules in a first direction;

second aligning means, provided on a surface of said second substrate on which said second electrodes are formed and surfaces of said second electrodes, for aligning the axes of the liquid crystal molecules in a second direction obtained by changing the first direction in a predetermined rotation direction by a predetermined angle;

a nematic liquid crystal material disposed between said first and second aligning means, having rotatory polarization in a rotation direction equal to the predetermined rotation direction, having a dielectric ratio $\Delta\epsilon/\epsilon\perp$ of not more than 0.8 as a ratio of a dielectric anisotropy $\Delta\epsilon$ to a dielectric constant $\epsilon\perp$ in a direction perpendicular to a liquid crystal molecular axis, and having an elastic constant ratio $K_{33}/K_{11}$ of not more than 1.0 as a ratio of a bending elastic constant $K_{33}$ to a splay elastic constant $K_{11}$;

sealing means for adhering said first and second substrates to be separated at the predetermined gap and sealing said nematic liquid crystal material between said first and second substrates; and

a pair of polarizing plates respectively disposed on outer surfaces of said first and second substrates, wherein the liquid crystal molecules of the liquid crystal material are aligned in a splay aligned state and in a twisted state in the predetermined rotation direction by the predetermined angle due to said first and second aligning means and the rotatory polarization of said liquid crystal material, so that transmission light is controlled by applying a voltage across the first and second electrodes.

In the liquid crystal device of the present invention, the aligning treatment directions of the substrates and the twisting direction of the alignment of the liquid crystal molecules have the relationship as described above. Thus, when the aligned state of the liquid crystal molecules between the substrates is viewed as a section along the twisting direction of the alignment, the liquid crystal molecules are aligned so that the liquid crystal molecules on the surfaces of the two substrates have opposite inclinations of tilt angles, and the tilt angles of the liquid crystal molecules are decreased as the molecules are separated from the substrate surfaces. In addition, the values $\Delta\epsilon/\epsilon\perp$ and $K_{33}/K_{11}$ of the liquid crystal material are as small as 0.8 or less and 1.0 or less, respectively. As a result, since a change in alignment of the liquid crystal molecules with respect to a change in application voltage is increased, sharp threshold characteristics can be obtained without prolonging a response time, and a good contrast and a wide viewing angle can be obtained even when time-divisional driving is performed at high speed.

Since the values $\Delta\epsilon/\epsilon\perp$ and $K_{33}/K_{11}$ of the liquid crystal material are set to be small, a change in effective voltage applied to a liquid crystal layer when liquid crystal molecules behave can be decreased, thus obtaining a short response time and sharp threshold characteristics. As a result, the liquid crystal display device of the present invention has a large transmission light amount in an ON state, and relatively flat spectral characteristics. Therefore, a display can be prevented from being undesirably colored, and the display device of the present invention is especially suitable for a color television.

This invention can be more fully understood from the following detailed description when taken in conjunction with the accompanying drawings, in which:

Fig. 1A is a schematic plan view showing directions of aligning treatments performed on opposing inner surfaces of a pair of opposing substrates in a conventional liquid crystal display device;

Fig. 1B is a schematic plan view showing directions of polarization axes of polarizing plates in the conventional liquid crystal display device;

Fig. 2 is a schematic sectional view taken along a direction of a molecular axis of each liquid crystal molecule in a twist-aligned state in the conventional liquid crystal display device and showing an aligned state of the liquid crystal molecules;

Fig. 3 is a sectional view showing a structure of a liquid crystal device of the present invention;

Fig. 4A is a schematic plan view showing directions of aligning treatments performed on opposing inner surfaces of a pair of opposing substrates in the liquid crystal device of the present invention;

Fig. 4B is a schematic plan view showing directions of polarization axes of polarizing plates in the liquid crystal device of the present invention;

Fig. 5 is a schematic sectional view taken along a direction of a molecular axis of each liquid crystal molecule in a twist-aligned state in the liquid crystal display device of the present invention and showing an aligned state of the liquid crystal molecules;

Fig. 6 is a graph of dielectric characteristics showing a change in dielectric constant of a liquid crystal layer sandwiched between the opposing substrates of the liquid crystal device;

Fig. 7 is a graph of spectral characteristics showing a spectral distribution of transmission light in ON and OFF states of a liquid crystal device of the present invention and a conventional liquid crystal device;

Fig. 8A is a schematic plan view showing aligning treatments performed on opposing inner surfaces of a pair of opposing substrates in another embodiment of the present invention; and

Fig. 8B is a schematic plan view showing direction of polarization axes of polarizing plates in the embodiment shown in Fig. 8A.

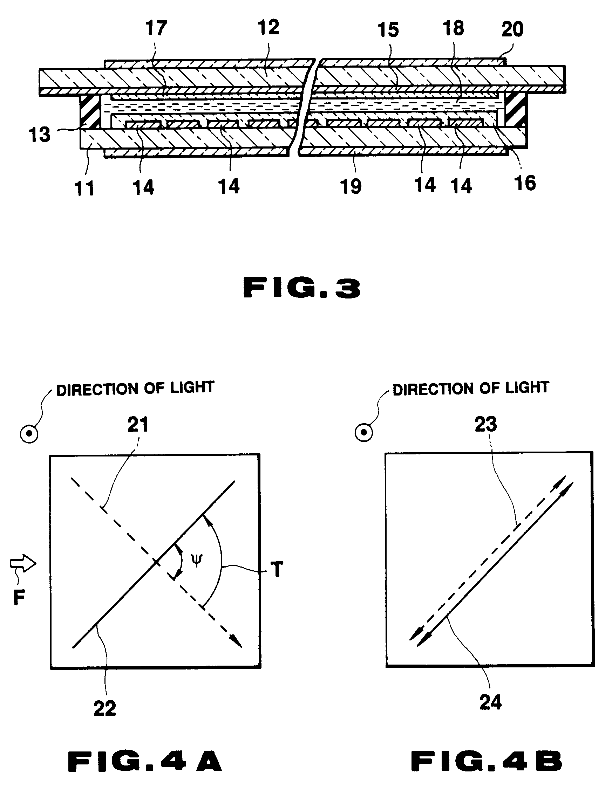

Preferred embodiments of the present invention will now be described with reference to the accompanying drawings. Fig. 3 shows a sectional structure of a liquid crystal device of the present invention. The liquid crystal device has the following structure. A pair of substrates 11 and 12 made of transparent glass are arranged to oppose each other at a predetermined gap. The pair of substrates 11 and 12 are adhered to each other by a seal member 13. A large number of stripe transparent scanning electrodes 14 are formed on the upper surface of one substrate (to be referred to as a lower substrate hereinafter) 11. One or more stripe signal electrodes 15 are formed on the lower surface of the other substrate (to be referred to as an upper substrate hereinafter) 12 to extend in a direction perpendicular to the scanning electrodes 14. Aligning films 16 and 17 are formed on the inner surfaces of the lower and upper substrates 11 and 12 to cover the scanning and signal electrodes 14 and 15. Each of the aligning films 16 and 17 is formed of an insulating film of an organic polymer such as polyimide. The aligning films 16 and 17 are subjected to an aligning treatment by, e.g., rubbing. The aligning treatment is performed as shown in Fig. 4A showing directions of the aligning treatments of the aligning films 16 and 17. The aligning film 16 of the lower substrate 11 is subjected to rubbing in an obliquely right lower direction of the drawing of the liquid crystal device, as indicated by a broken arrow 21 in Fig. 4A. The aligning film 17 of the upper substrate 12 is subjected to rubbing in a direction crossing the direction of the broken arrow 21 at about 90°, as indicated by a solid arrow 22 in Fig. 4A. More specifically, when a light beam is transmitted from the lower substrate 11 toward the upper substrate 12, the direction of the aligning treatment (rubbing direction) of the aligning film 17 is rotated clockwise by about 90° with reference to the direction of the aligning treatment of the lower substrate 11 with respect to the light propagation direction (when viewed from the rear surface of the drawing of Fig. 4A).

A nematic liquid crystal material 18 having positive dielectric anisotropy is sealed in a space defined by the upper and lower substrates 12 and 11 and the seal member 13. The nematic liquid crystal material is added with an optical active substance such as a chiral liquid crystal material for determining a twisting direction when liquid crystal molecules are twist-aligned. The chiral liquid crystal material has dextrorotatory for twisting the direction of the alignment of liquid crystal molecules clockwise with respect to a propagation direction of a light beam (when viewed from the rear side of the drawing of Fig. 4A). The nematic liquid crystal material has physical properties in which a ratio ($\Delta\epsilon/\epsilon_\perp$) of its dielectric anisotropy $\Delta\epsilon$ to a dielectric constant $\epsilon_\perp$ in a direction perpendicular to the liquid crystal molecular axis is about 0.8 or less, and a ratio ($K_{33}/K_{11}$) of a bending elastic constant $K_{33}$ to a splay elastic constant $K_{11}$ is about 1.0 or less. The nematic liquid crystal material 18 is influenced by alignment regulating forces of the aligning films 16 and 17 near the films 16 and 17. For this reason, the liquid crystal molecules near the aligning films 16 and 17 are aligned so that their molecular axes coincide with the aligning treatment directions of the aligning films 16 and 17. The liquid crystal molecules in the middle portion of the liquid crystal layer are aligned according to the rotatory polarization of the chiral liquid crystal material so that their molecular axes are gradually twisted clockwise (at an angle $\psi$ (about 90°) in a direction of an arrow T) with respect to the propagation direction of a light beam.

A pair of polarizing plates 19 and 20 are disposed on the outer surfaces of the upper and lower substrates 12 and 11, respectively. The lower polarizing plate 19 is arranged adjacent to the lower substrate 11. The lower polarizing plate 19 is arranged such that the direction of its polarization axis (absorption axis or transmission axis) is almost perpendicular to the aligning treatment direction 21 of the aligning film 16, as indicated by a broken arrow 23 in Fig. 4B. The upper polarizing plate 20 is arranged adjacent to the upper substrate 12. The upper polarizing plate 20 is arranged so that the direction of its polarization axis is almost parallel to the polarization axis direction 23 of the lower polarizing plate 19, as indicated by a solid arrow 24 in Fig. 4B.

An aligned state of the liquid crystal material 18 sandwiched between the upper and lower substrates 12 and 11 in the liquid crystal device of the present invention will be described in more detail below.

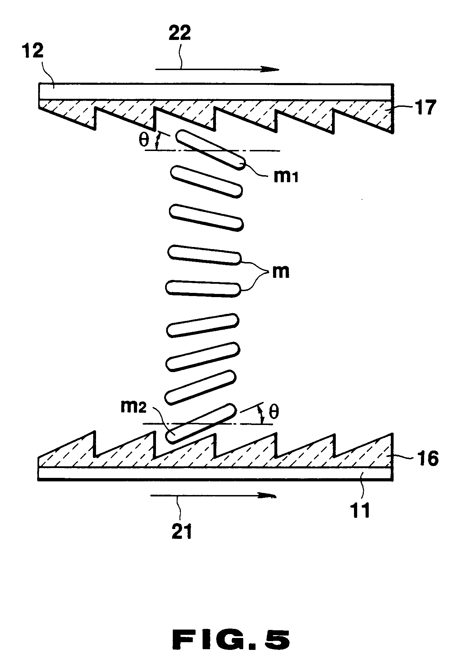

Fig. 5 shows an aligned state of liquid crystal molecules in the liquid crystal device as a section taken along the liquid crystal molecular axis. In this liquid crystal device, the aligning treatment direction 22 of the aligning film 17 on the upper substrate 12 is rotated by the angle $\psi$ in the same direction as the twisting direction T of the alignment of the liquid crystal molecules with respect to the aligning treatment direction 21 of the aligning film 16. For this reason, the liquid crystal molecules $\underline{m}$ between the upper and lower substrates 12 and 11 are aligned along fine grooves formed on the aligning films 17 and 16 near their surfaces. Therefore, the liquid crystal molecules $m_1$ and $m_2$ near the surfaces of the aligning films 17 and 16 respectively formed on the upper and lower substrates 12 and 11 have opposite inclinations in the up-and-down direction of the drawing, i.e., have opposite signs of tilt angles $\theta$. That is, the liquid crystal molecules $\underline{m}$ near the aligning films 17 and 16 have opposite inclinations in the up-and-down direction of the drawing, the tilt angles of the liquid crystal molecules $\underline{m}$ are decreased as the molecules are separated from the surfaces of the aligning films 17 and 16, and the molecules become almost horizontal in the central portion of the liquid crystal layer. The liquid crystal molecules are twist-aligned so that the molecules $m_1$ and $m_2$ define an angle of about 90° when viewed from the light incidence direction. The tilt

angle $\theta$ of the liquid crystal molecules $\underline{m}$ near the surfaces of the aligning films 16 and 17 is preferably set to be 5° or less.

As described above, in the liquid crystal device of this embodiment, the relationship between the aligning treatment directions 22 and 21 of the upper and lower substrates 12 and 11 and the polarization axis directions 23 and 24 of the lower (input-side) and upper (output-side) polarizing plates 19 and 20 are the same as that of the conventional liquid crystal display device. However, as the nematic liquid crystal material sealed between the upper and lower substrates 12 and 11, one having rotatory polarization in a rotation direction opposite to that of the nematic liquid crystal material used in the conventional liquid crystal display device is used. As a result, in the liquid crystal device of this embodiment, the nematic liquid crystal molecules between the upper and lower substrates 12 and 11 are aligned in a splay aligned state and in a 90°-twisted state. For this reason, in this liquid crystal device, a direction in which a highest contrast is obtained, i.e., a viewing angle, corresponds to a direction of an arrow F shown in Fig. 4A. More specifically, the viewing angle position providing the highest contrast corresponds to a position tilted left side by 5 to 30° from the normal in Fig. 4A.

The function and operation of this embodiment will be described below.

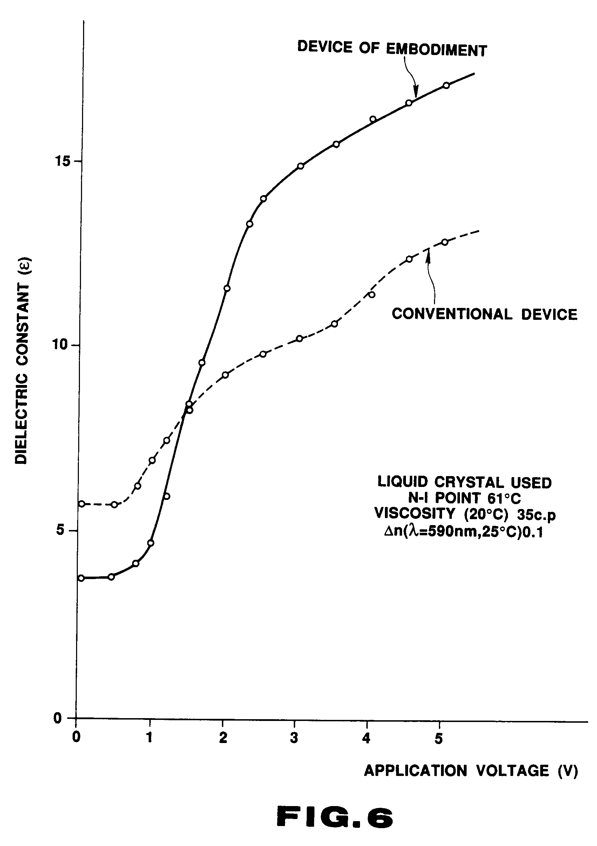

Fig. 6 shows dielectric constant characteristics of the liquid crystal material of the liquid crystal device of this embodiment and the conventional liquid crystal display device. Fig. 6 shows results of checking a change in dielectric constant ($\epsilon$) upon a change in voltage applied across opposing electrodes when a liquid crystal material having the following physical properties and a relatively large dielectric constant ($\epsilon$) was used:

N-I point (transition temperature from nematic phase to isotropic phase) 61°C

viscosity (20°C) 35 c.p.

$\Delta n$ ($\lambda$ = 590 nm, 25°C) 0.1

As can be seen from Fig. 6, the liquid crystal device of this embodiment exhibits a considerably large change in dielectric constant ($\epsilon$) upon a change in application voltage than the conventional liquid crystal device. The change in dielectric constant represents a change in aligned state of liquid crystal molecules upon application of a voltage.

More specifically, Fig. 6 indicates that a change from an initial state wherein the liquid crystal molecules are in a splay aligned state and in a 90°-twisted state like in the embodiment of the present invention to a state wherein liquid crystal molecules are aligned to be almost perpendicular to the substrates is larger than that in the conventional TN-LCD. The change in aligned state of the liquid crystal molecules corresponds to an optical change of a liquid crystal device. A liquid crystal device which exhibits a large change rate of the dielectric constant $\epsilon$ of the liquid crystal material in response to an application voltage has a large optical change rate in response to the application voltage. Therefore, the liquid crystal device of this embodiment has a splay and 90°-twisted aligned state as an initial aligned state, thus providing sharp threshold characteristics and a wide viewing angle.

In the liquid crystal device which has a large change rate of the dielectric constant upon a change in application voltage like in the embodiment of the present invention, the impedance of the liquid crystal layer is decreased as the application voltage is increased. As a result, a voltage drop is caused by the liquid crystal layer, and an effective voltage applied across the liquid crystal layer to behave the liquid crystal molecules is lowered. Therefore, the sharpness of the threshold characteristics of the liquid crystal device is impaired, and a response time is prolonged.

For this reason, the liquid crystal device of the embodiment employs a nematic liquid crystal having a $\Delta\epsilon/\epsilon_{\perp}$ value of 0.8 or less and a $K_{33}/K_{11}$ value 1.0 or less. In a liquid crystal material having a small $\Delta\epsilon/\epsilon_{\perp}$ value, the change rate of the dielectric constant in the liquid crystal layer upon a change in aligned state of liquid crystal molecules is small, and a decrease in impedance of the liquid crystal layer is also small. Therefore, a degree of a decrease in effective voltage applied to the liquid crystal layer is minimized. As a result, the threshold characteristics can be improved, and a response time can be shortened. In the liquid crystal material having a small $K_{33}/K_{11}$ value, sharpness of the threshold characteristics can be improved.

As described above, the liquid crystal device of this embodiment uses a nematic liquid crystal having a $\Delta\epsilon/\epsilon_{\perp}$ value of 0.8 or less and a $K_{33}/K_{11}$ value of 1.0 or less as the liquid crystal material, and the nematic liquid crystal material is twisted by about 90° while maintaining the splay aligned state. In the liquid crystal device of this embodiment, sharp threshold characteristics can be obtained without prolonging a response time, and a high contrast can be obtained even when high duty multiplex driving is performed. In addition, a wide viewing angle can also be obtained.

Example in which the present invention is applied to a liquid crystal display device will be described below.

For the liquid crystal display device of this embodiment, electrooptical characteristics were measured using a nematic liquid crystal material I or II having physical properties (those in a state wherein a chiral liquid crystal material is not mixed) shown in Table 1 below.

Table 1

|  |  | Liquid Crystal I | Liquid Crystal II |
|---|---|---|---|
| S-N (°C) |  | < -30 | < -30 |
| N-I (°C) |  | 62 | 67 |
| Viscosity (c.p.) |  | 28 | 34 |
| Δn | 610 nm | 0.115 | 0.102 |
|  | 545 nm | 0.119 | 0.104 |
|  | 435 nm | 0.134 | 0.117 |

Table 2 below shows examination results of a contrast and a response time of the liquid crystal display device of this embodiment and the conventional liquid crystal display device when the liquid crystal I shown in Table 1 was used.

Table 2

|  | Prior Art | Example 1 |
|---|---|---|
| Liquid Crystal Used | Liquid Crystal I + Chiral Liquid Crystal of Levorotatory | Liquid Crystal I + Chiral Liquid Crystal of Dextrorotatory |
| Vst (50%) | 5.48 | 5.78 |
| Vst (50%)/Vst (5%) | 1.18 | 1.14 |
| Contrast | 28 | 42 |
| Response Time (msec) | < 100 | < 100 |

In both the conventional liquid crystal device and the liquid crystal device of this embodiment, the twist angle $\psi$ of the alignment of the liquid crystal molecules is about 90° (twisting directions are opposite to each other); the tilt angle $\theta$ of liquid crystal molecules on the substrate surface is $\theta < 5°$; and the thickness of the liquid crystal layer is 4.2 $\mu$m. In Table 2, Vst (50%) represents a drive voltage corresponding to a transmittance of 50% when the device was statically driven at 1 kHz, and Vst (50%)/Vst (5%) represents an effective voltage ratio necessary for a change in luminance corresponding to a transmittance of 50% to 5% when the device was statically driven at 1 kHz. As the value of Vst (50%)/Vst (5%) is smaller, a change rate of a luminance upon a change in voltage is large. The values of the contrast and response time (rise time + decay time) in Table 2 are those when the liquid crystal device was time-divisionally driven at 1/56 duty, 1/8.5 bias, and 60 kHz.

As can be understood from Table 2, the liquid crystal display device of this embodiment has a short response time equivalent to that of the conventional liquid crystal display device (TN-LCD in which the twist angle of the alignment of liquid crystal molecules is about 90°), and a very high contrast almost twice that of the conventional liquid crystal display device.

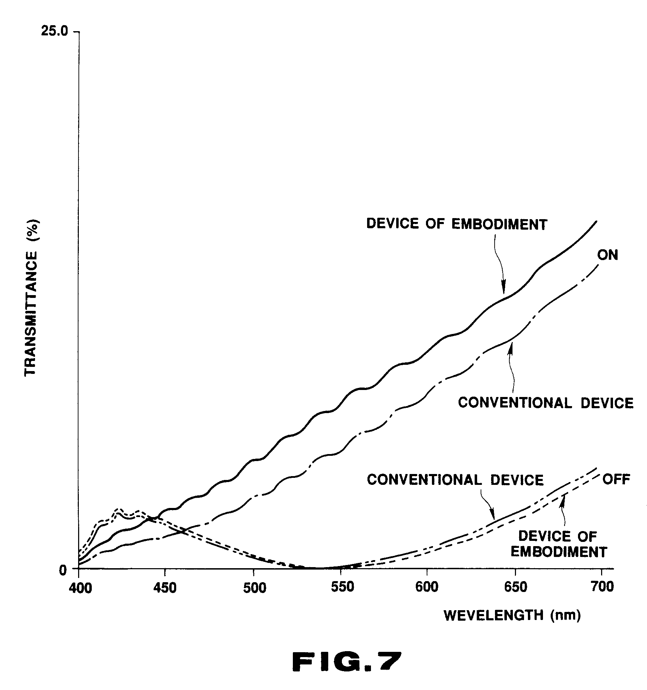

Fig. 7 shows comparison between spectral characteristics of the liquid crystal display device of this embodiment and the conventional liquid crystal display device. The spectral distribution of transmission light of the liquid crystal display device of this embodiment and that of the conventional liquid crystal display device exhibit almost equal tendencies. However, the liquid crystal display device of this embodiment has a high transmittance in an ON state. More specifically, according to this embodiment, a liquid crystal display device which is not colored and is bright can be obtained.

The relationship between a wavelength of incident light and the thickness of the liquid crystal layer in the liquid crystal display device of this embodiment will be examined below. Table 3 shows the thicknesses of layers of liquid crystal I in Table 1, and the contrast ratios these layers exhibit to red, green, and blue

8

incident light beams. Table 4 shows the thicknesses of layers of the liquid crystal II in Table 1, and the contrast ratios these layers exhibit to red, green, and blue incident light beams. In order to generate red, green, and blue incident light beams, filters are used. A color filter having a maximum transmittance at 610 nm was used as a red filter; a color filter having a maximum transmittance at 545 nm as a green filter; and a color filter having a maximum transmittance at 435 nm as a blue filter.

Table 3

| Thickness of Liquid Crystal Layer | Red | Green | Blue |
|---|---|---|---|
| 4.03 $\mu$m | 7 | 36 | 24 |
| 4.67 $\mu$m | 26 | 48 | 28 |
| 5.08 $\mu$m | 43 | 33 | 18 |

Table 4

| Thickness of Liquid Crystal Layer | Red | Green | Blue |
|---|---|---|---|
| 4.06 $\mu$m | 3 | 7 | 29 |
| 4.67 $\mu$m | 7 | 34 | 35 |
| 5.05 $\mu$m | 12 | 52 | 26 |

In this manner, in the liquid crystal display device of this embodiment, the thickness of the liquid crystal layer corresponding to a maximum contrast varies at each wavelength. In this embodiment, a value $\Delta n \cdot d/\lambda$ obtained by dividing a product of a refractive index anisotropy $\Delta n$ and a thickness $\underline{d}$ of the liquid crystal layer with a wavelength $\lambda$ of incident light preferably falls within the range of 0.8 to 1.5. Contrast ratios with respect to red, green, and blue wavelength light beams vary depending on the thickness of the liquid crystal layer. Therefore, in order to display a full-color image by arranging red, green, and blue color filters in the liquid crystal display device, the thicknesses of the color filters can be changed to select optimal thicknesses of the liquid crystal layers corresponding to color pixel display portions. For example, in Table 3, it is preferable that the thickness of the liquid crystal layer of a red pixel display portion is set to be 5.08 $\mu$m, that of a green pixel display portion is set to be 4.67 $\mu$m, and that of a blue pixel display portion is set to be 4.03 $\mu$m. As a result, contrasts corresponding to red, green, and blue wavelength light beams can be maximized, and a clear color image can be obtained.

In order to check the influences of the $\Delta\epsilon/\epsilon_\perp$ value and the $K_{33}/K_{11}$ value of a liquid crystal material on a liquid crystal display device, various nematic liquid crystal materials shown in Table 5 below were prepared, and electrooptical characteristics of liquid crystal display devices using these nematic liquid crystal materials were measured.

Table 5

| | Liquid Crystal III | Liquid Crystal IV | Liquid Crystal V | Liquid Crystal VI |
|---|---|---|---|---|
| S-N (°C) | < -30 | < -10 | < -10 | < -30 |
| N-I (°C) | 71 | 62 | 69 | 62 |
| $\Delta n$ | 0.118 | 0.128 | 0.119 | 0.118 |
| Viscosity (c.p.) | 13 | 26 | 33 | 28 |
| $\Delta \epsilon$ | 2.7 | 1.7 | 1.4 | 0.8 |
| $\epsilon_\perp$ | 3.1 | 2.7 | 2.7 | 2.6 |
| $\Delta \epsilon / \epsilon_\perp$ | 0.87 | 0.63 | 0.52 | 0.31 |
| $K_{33}/K_{11}$ | 1.16 | < 1.0 | < 0.8 | < 0.8 |

Table 6 below shows measurement results of electrooptical characteristics when liquid crystal materials IV to VI having smaller $\Delta \epsilon / \epsilon_\perp$ values and $K_{33}/K_{11}$ values of those in Table 5 were used in the liquid crystal display device of this embodiment.

Table 6

| | Example 2 | Example 3 | Example 4 | Example 5 |
|---|---|---|---|---|
| Liquid Crystal Used | Liquid Crystal IV | Liquid Crystal V | Liquid Crystal VI | Liquid Crystal V |
| Twist Angle ($\psi$) | 90° | 90° | 90° | 90° |
| Thickness of Liquid Crystal Layer ($\mu$m) | 4.2 | 4.2 | 4.2 | 4.2 |
| Tilt Angle ($\theta$) | 1.8° | 1.8° | 1.8° | 3.0° |
| Vst (50%) | 4.29 | 5.04 | 5.78 | 5.11 |
| Vst (50%)/Vst (5%) | 1.17 | 1.15 | 1.14 | 1.17 |
| Contrast | 32 | 35 | 42 | 33 |
| Response Time (msec) | < 100 | < 100 | < 100 | < 100 |

Note that each of the liquid crystals IV to VI of Examples 2 to 5 was obtained by adding a chiral liquid crystal material of dextrorotatory to a nematic liquid crystal material. The measurement conditions of these electrooptical characteristics are the same as those in Table 2.

As can be understood from Table 6, in the liquid crystal display devices of Examples 2 to 5, the contrast is very high, i.e., 32 or more (the contrast of the conventional liquid crystal display device was 15 to 18); the value of Vst (50%)/Vst (5%) is small; sharp threshold characteristics are obtained; and a response time is short, i.e., 200 to 300 msec or less.

Upon comparison of the liquid crystal display devices of Examples 2 to 5, in Examples 2 to 4 which have the same tilt angle $\theta$ of the liquid crystal molecules on the surfaces of the aligning films 17 and 16 ($\theta$ = 1.8), better characteristics can be obtained as the $\Delta \epsilon / \epsilon_\perp$ and $K_{33}/K_{11}$ values are smaller. Therefore, the $\Delta \epsilon / \epsilon_\perp$ and $K_{33}/K_{11}$ values are preferably as small as possible. When the $\Delta \epsilon / \epsilon_\perp$ value exceeds 0.8 or when the $K_{33}/K_{11}$ value exceeds 1.0, electrooptical characteristics are considerably impaired. Therefore, the nematic liquid crystal material used in this invention preferably has a $\Delta \epsilon / \epsilon_\perp$ value of about 0.8 or less and a $K_{33}/K_{11}$ value of about 1.0 or less.

When the tilt angle $\theta$ of the liquid crystal molecules is set at 3.0° like in Example 5, electrooptical characteristics are impaired and alignment stability of the liquid crystal molecules is also impaired as compared to Example 3 which used the liquid crystal V having the same physical properties. Therefore, the tilt angle $\theta$ of the liquid crystal molecules is preferably as small as possible. In this case, if the tilt angle $\theta$ of

10

the liquid crystal molecules is 5° or less, satisfactory electrooptical characteristics can be obtained. More preferably, the tilt angle $\theta$ of the liquid crystal molecules is set at 2° or less.

Table 7 below shows comparative examples of the present invention.

More specifically, electrooptical characteristics of Comparative Example 1 in which the liquid crystal VI having smallest $\Delta\epsilon/\epsilon_\perp$ and $K_{33}/K_{11}$ values in Table 5 was sealed in the conventional liquid crystal display device and Comparative Example 2 in which the liquid crystal III having large $\Delta\epsilon/\epsilon_\perp$ and $K_{33}/K_{11}$ values was sealed in the liquid crystal display device in which liquid crystal molecules were aligned like in the embodiment were measured under the same conditions as those for Examples 2 to 5.

Table 7

|  | Comparative Example 1 | Comparative Example 2 |
|---|---|---|
| Liquid Crystal Used | Liquid Crystal VI | Liquid Crystal III |
| Aligned State | Fig. 2 | Fig. 5 |
| Twist Angle ($\psi$) | 90° | 90° |
| Thickness of Liquid Crystal Layer ($\mu$m) | 4.2 | 4.2 |
| Tile Angle ($\theta$) | 1.8° | 1.8° |
| Vst (50%) | 5.48 | 2.96 |
| Vst (50%)/Vst (5%) | 1.18 | 1.19 |
| Contrast | 28 | 23 |
| Response Time (msec) | < 100 | < 100 |

The liquid crystal VI of Comparative Example 1 was prepared by adding a chiral liquid crystal material of levorotatory to a nematic liquid crystal material, and the liquid crystal III of Comparative Example 2 was prepared by adding a chiral liquid crystal material of dextrorotatory to the nematic liquid crystal material.

Upon comparison between Comparative Examples 1 and 2 and Examples 2 to 5 shown in Table 6, even when the liquid crystal molecules are aligned like in the embodiment, the contrast and the sharpness of threshold characteristics cannot be improved in a liquid crystal display device which has a large $\Delta\epsilon/\epsilon_\perp$ value of 0.87 and a large $K_{33}/K_{11}$ value of 1.16 like in Comparative Example 2. In the conventional liquid crystal display device, a relatively high contrast can be obtained like in Comparative Example 1 when a liquid crystal having small $\Delta\epsilon/\epsilon_\perp$ and $K_{33}/K_{11}$ values is used. Nevertheless, the contrast is low, i.e., about 28 in this case. Contrary to this, the liquid crystal display device of Example 4 using the same liquid crystal VI as in Comparative Example 1 has a considerably better contrast of 42. Even in Examples 2 and 3 using the liquid crystals III and IV having larger $\Delta\epsilon/\epsilon_\perp$ and $K_{33}/K_{11}$ values than those of the liquid crystal VI used in Comparative Example 1, their electrooptical characteristics are greatly superior to those of Comparative Example 1. In Examples 2 and 3, $\Delta\epsilon$ of the liquid crystal can be increased since the $\Delta\epsilon/\epsilon_\perp$ value is large. Therefore, in these examples, an operation voltage is lower than that in Comparative Example 1. A high contrast and sharp threshold characteristics can be obtained if the $\Delta\epsilon/\epsilon_\perp$ value of the liquid crystal was not decreased to that of Comparative Example 1. Therefore, since the liquid crystal display devices of Examples 2 and 3 can be driven at a voltage lower than that in Comparative Example 1, a driver therefor can be simplified.

The present invention is not limited to the above embodiment, and can be widely applied.

More specifically, in the above embodiment, the liquid crystal material having dextrorotatory is used. However, a liquid crystal material having levorotatory may be used. In this case, the aligning treatment direction of an output substrate is set in a direction rotated in the same direction as a twisting direction of alignment of liquid crystal molecules with respect to the aligning treatment direction of an input-side lower substrate. A $\Delta\epsilon/\epsilon_\perp$ value of a liquid crystal material is set to be about 0.8 or less, and a $K_{33}/K_{11}$ value is set to be about 1.0 or less, thus obtaining a liquid crystal display device having the same effect as in the above embodiment.

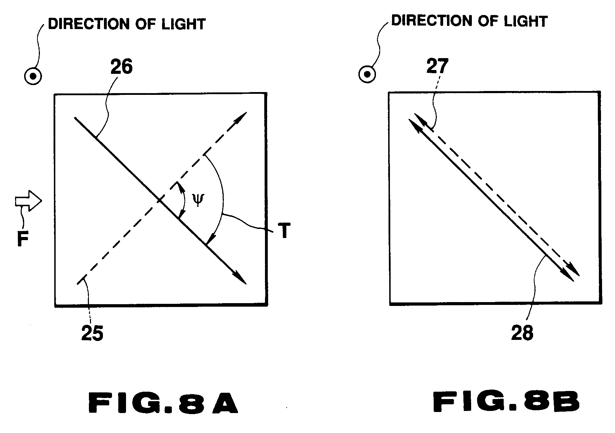

Figs. 8A and 8B show another embodiment of the present invention. In Fig. 8A, reference numeral 25 denotes an aligning treatment direction of a lower substrate to which light is input; 26, an aligning treatment direction of an upper substrate from which light is output; and T, a twisting direction of alignment of liquid crystal molecules. The aligning treatment direction 25 of the lower substrate is set in the same direction as the aligning treatment direction 22 of the upper substrate in the embodiment shown in Fig. 4, and the aligning treatment direction of the upper substrate is set in the same direction as the aligning treatment direction 21 of the lower substrate of the embodiment in Fig. 4. As a nematic liquid crystal material sealed between the substrates, a liquid crystal material having rotatory polarization in a direction opposite to that in the above embodiment (i.e., a nematic liquid crystal added with a chiral liquid crystal of levorotatory) is used. Liquid crystal molecules of the nematic liquid crystal material are twist-aligned counterclockwise as indicated by an arrow T at a twist angle $\psi$ of about 90° due to its levorotatory from the lower substrate toward the upper substrate (when viewed from the rear side of the drawing of Fig. 8A). A viewing angle position F of the liquid crystal display device is located at the left side of the device, as shown in Fig. 8A. In Fig. 8B, reference numeral 27 denotes a polarization axis direction of a lower polarizing plate; and 28, a polarization axis direction of an upper polarizing plate. The polarization axis direction 27 of the lower polarizing plate is set in a direction almost perpendicular to the aligning treatment direction 25 of the lower substrate, and the polarization axis direction 28 of the upper polarizing plate is set to be almost parallel to the polarization axis direction 27 of the lower polarizing plate.

In this embodiment, since the aligning treatment direction 26 of the upper substrate is set in a direction rotated in the same direction as the twisting direction T of the alignment of the liquid crystal molecules with respect to the aligning treatment direction 25 of the lower substrate, the aligned state of liquid crystal molecules between the two substrates corresponds to a splay aligned state wherein the inclinations of tilt angles of liquid crystal molecules on the surfaces of the two substrates are opposite to each other and the tilt angles of the liquid crystal molecules are decreased as the molecules are separated from the surfaces of the substrates when viewed in a section taken along the twisting direction T. The $\Delta\epsilon/\epsilon\perp$ value of the liquid crystal material is set to be about 0.8 or less, and the $K_{33}/K_{11}$ value is set to be about 1.0 or less. Therefore, sharp threshold characteristics can be obtained without prolonging a response time, and a high contrast can be obtained even when time-divisional driving is performed at high speed as in the above embodiment. In addition, a wide viewing angle can be obtained.

## Claims

1.  A liquid crystal device comprising:
    a first substrate (11) on which a plurality of first electrodes (14) are arrayed;
    a second substrate (12) disposed to be separated from said first substrate (11) at a predetermined gap and having at least one second electrode (15) arranged to oppose said first electrodes (14);
    first aligning means (16) for aligning axes of liquid crystal molecules in a first direction;
    second aligning means (17) for aligning the axes of the liquid crystal molecules in a second direction;
    a nematic liquid crystal material (18) disposed between said first (16) and second (17) aligning means, and twist-aligned by aligning regulating forces of said first and second aligning means;
    a pair of polarizing plates (19,20) respectively disposed on outer surfaces of said first (11) and second (12) substrates,
    transmission being controlled by applying a voltage across said first and second electrodes,
    said second aligning means (17) aligns the liquid crystal molecules in the second direction, said second direction being different from the first direction and specified relative to the first direction by a predetermined angle; in a first rotation direction and
    said nematic liquid crystal material (18) having a twist-aligned state in a rotation direction equal to said first rotation direction and the liquid crystal molecules of said nematic liquid crystal material being aligned in a splay-aligned state
    said first aligning means (16) being provided on a surface of said first substrate (11) on which said first electrodes (14) are formed, and covering said first electrodes (14);
    said second aligning means (17) being provided on a surface of said second substrate (12) on which said second electrodes (15) are formed, and covering said second electrodes (15);
    **characterized in that**
    said nematic liquid crystal material (18) has a dielectric ratio $\Delta\epsilon / \epsilon\perp$ of not more than 0.8 as a ratio of a dielectric anisotropy $\Delta\epsilon$ to a dielectric constant $\epsilon I$ in the direction perpendicular to the axis of the liquid crystal molecules, and has an elastic constant ratio $K_{33}/K_{11}$ of not more than 1.0 as a ratio of an elastic constant $K_{33}$ to a splay elastic constant $K_{11}$ and
    sealing means (13) are provided for adhering said first (11) and second (12) substrates to be separated at the predetermined gap and sealing said nematic liquid crystal material between said first and second substrates.

EP 0 352 792 B1

2. A liquid crystal device according to claim 1, characterized in that said liquid crystal material (18) has a retardation $\Delta n \cdot d/\lambda$ of 0.8 to 1.5 represented by a value obtained by dividing a product $\Delta n \cdot d$ of an optical anisotropy $\Delta n$ and a thickness $\underline{d}$ of a liquid crystal layer with a wavelength $\lambda$ of incident light.

3. A liquid crystal device according to claim 1,
   **characterized in that**
   said liquid crystal material (18) has a dielectric ratio $\Delta\epsilon / \epsilon_\perp$ ranging from 0.3 to 0.63.

4. A liquid crystal device according to claim 1, characterized in that said first and second aligning means (16, 17) comprise aligning films for aligning adjacent liquid crystal molecules ($\underline{m}$) at a tilt angle $\theta$ of not more than 5°.

5. A liquid crystal device according to claim 4, characterized in that said tilt angle $\theta$ is not more than 3°.

6. A liquid crystal device according to claim 4, characterized in that said aligning films (16, 17) comprise coating films made of an organic polymer.

7. A liquid crystal device according to claim 6, characterized in that a surface of each of said coating films (16, 17) made of the organic polymer is subjected to rubbing to be provided with a directivity in one direction.

8. A liquid crystal device according to claim 1, characterized in that the second direction is a direction obtained by changing the first direction clockwise by a predetermined angle with respect to a propagation direction of light; and
   said liquid crystal material (18) is added with a chiral liquid crystal compound of dextrorotatory to have optically clockwise rotatory polarization.

9. A liquid crystal device according to claim 1, characterized in that the second direction is a direction obtained by changing the first direction counterclockwise by a predetermined angle with respect to a propagation direction of light; and
   said liquid crystal material (18) is added with a chiral liquid crystal compound of levorotatory to have optically counterclockwise rotatory polarization.

10. A liquid crystal device according to claim 1, characterized in that the second direction is a direction obtained by changing the first direction by about 90°.

11. A liquid crystal device according to claim 1, characterized in that said pair of polarizing plates (19, 20) are disposed so that polarization axes thereof are almost parallel to each other.

12. A liquid crystal device according to claim 1, characterized in that at least one of said pair of polarizing plates (19, 20) is arranged so that a polarization axis thereof is almost perpendicular to or parallel to the first direction.

13. A liquid crystal device according to claim 1,
    **characterized in that**
    said nematic liquid crystal material (18) has a dielectric ratio of $\Delta\epsilon / \epsilon_\perp$ ranging from 0.31 to 0.51 and an elastic constant ratio of $K_{33} / K_{11}$ of less than 0.8.

**Patentansprüche**

1. Flüssigkristallvorrichtung mit einem ersten Substrat (11), auf welchem eine Vielzahl von ersten Elektroden (14) angeordnet sind,
   einem zweiten Substrat (12), welches mit einem vorbestimmten Abstand von dem ersten Substrat (11) getrennt angeordnet ist, und welches wenigstens eine zweite Elektrode (15) aufweist, welche gegenüberliegend den ersten Elektroden (14) angeordnet ist,
   einem ersten Ausrichtungsmittel (16) zum Ausrichten der Achsen der Flüssigkristallmoleküle in einer ersten Richtung,
   einem zweiten Ausrichtungsmittel (17) zum Ausrichten der Achsen der Flüssigkristallmoleküle in einer

13

zweiten Richtung,

einem nematischen Flüssigkristallmaterial (18), welches zwischen dem ersten (16) und dem zweiten (17) Ausrichtungsmittel angeordnet ist, und welches durch ausrichtungsregulierende Kräfte des ersten und zweiten Ausrichtungsmittels verdreht ausgerichtet ist,

einem Paar Polarisationsplatten (19, 20), welche an den äußeren Oberflächen des ersten (11) und des zweiten (12) Substrates angeordnet sind, wobei die Transmission durch Anlegen einer Spannung an die ersten und zweiten Elektroden gesteuert wird,

und wobei die zweiten Ausrichtungsmittel (17) die Flüssigkristallmoleküle in einer zweiten Richtung ausrichten, welche von der ersten Richtung unterschiedlich ist und welche relativ zur ersten Richtung durch einen vorgegebenen Winkel in eine erste Rotationsrichtung ausgezeichnet ist und wobei das nematische Flüssigkristallmaterial (18) einen verdreht ausgerichteten Zustand in einer Rotationsrichtung hat, welche gleich der ersten Rotationsrichtung ist, und die Flüssigkristallmoleküle des nematischen Flüssigkristallmaterials in einem schräg ausgerichteten Zustand sind,

und wobei die ersten Ausrichtungsmittel (16) auf einer Oberfläche des ersten Substrates (11) vorgesehen sind, auf welcher die ersten Elektroden (14) gebildet sind, wobei die ersten Ausrichtungsmittel (16) die ersten Elektroden (14) bedecken,

und die zweiten Ausrichtungsmittel (17) auf einer Oberfläche des zweiten Substrates (12) vorgesehen sind, auf welcher die zweiten Elektroden (15) gebildet sind, wobei die zweiten Ausrichtungsmittel (17) die zweiten Elektroden (15) bedecken,

**dadurch gekennzeichnet**, daß

das nematische Flüssigkristallmaterial (18) ein dielektrisches Verhältnis $\Delta\epsilon / \epsilon_\perp$ von nicht mehr als 0,8 als ein Verhältnis der dielektrischen Anisotropie $\Delta\epsilon$ zu einer dielektrischen Konstanten $\epsilon_\perp$ in der Richtung senkrecht zu der Achse der Flüssigkristallmoleküle und weiterhin ein Verhältnis der elastischen Konstanten $K_{33} / K_{11}$ von nicht mehr als 1,0 als ein Verhältnis einer elastischen Konstanten $K_{33}$ zu einer schrägelastischen $K_{11}$ hat,

und daß Dichtungsmittel (13) vorgesehen sind, um das erste (11) und das zweite (12) Substrat in einem vorbestimmten Abstand getrennt voneinander zusammenzuhängen und das nematische Flüssigkristallmaterial zwischen dem ersten und zweiten Substrat abzudichten.

2. Flüssigkristallvorrichtung nach Anspruch 1, **dadurch gekennzeichnet**, daß das Flüssigkristallmaterial (18) eine Verzögerung $\Delta n \cdot \lambda$ von 0,8 bis 1,5 hat, welche erreicht wird, indem ein Produkt $\Delta n \cdot d$ einer optischen Anisotropie $\Delta n$ und einer Dicke d einer Flüssigkristallschicht durch eine Wellenlänge $\lambda$ von einfallendem Licht dividiert wird.

3. Flüssigkristallvorrichtung nach Anspruch 1, **dadurch gekennzeichnet**, daß das Flüssigkristallmaterial (18) ein dielektrisches Verhältnis $\Delta\epsilon / \epsilon_\perp$ von 0,3 bis 0,63 hat.

4. Flüssigkristallvorrichtung nach Anspruch 1, **dadurch gekennzeichnet**, daß das erste und das zweite Ausrichtungsmittel (16, 17) Ausrichtungsfilme enthält, um nebeneinanderliegende Flüssigkristallmoleküle (m) mit einem Tiltwinkel $\theta$ von nicht mehr als 5° auszurichten.

5. Flüssigkristallvorrichtung nach Anspruch 4, **dadurch gekennzeichnet**, daß der Tiltwinkel $\theta$ nicht mehr als 3° ist.

6. Flüssigkristallvorrichtung nach Anspruch 4, **dadurch gekennzeichnet**, daß die Ausrichtungsfilme (16, 17) Beschichtungsfilme aus einem organischen Polymer enthalten.

7. Flüssigkristallvorrichtung nach Anspruch 6, **dadurch gekennzeichnet**, daß eine Oberfläche von jedem der Beschichtungsfilme (16, 17) aus organischem Poylmer, einem Reiben ausgesetzt wird, um so mit einer Richtfähigkeit in einer Richtung versehen zu werden.

8. Flüssigkristallvorrichtung nach Anspruch 1, **dadurch gekennzeichnet**, daß die zweite Richtung eine Richtung ist, welche durch Änderung der ersten Richtung im Uhrzeigersinn durch einen vorgegebenen Winkel in bezug auf eine Ausbreitungsrichtung des Lichts erhalten wird, und daß dem Flüssigkristallmaterial (18) eine rechtsdrehende chirale Flüssigkristallkomponente hinzugefügt wird, um eine optische Rotationspolarisation im Uhrzeigersinn zu haben.

**9.** Flüssigkristallvorrichtung nach Anspruch 1, **dadurch gekennzeichnet**, daß die zweite Richtung eine Richtung ist, welche durch Änderung der ersten Richtung im Gegenuhrzeigersinn durch einen vorgegebenen Winkel in bezug auf eine Ausbreitungsrichtung des Lichts erhalten wird, und daß dem Flüssigkristallmaterial (18 ) eine linksdrehende chirale Flüssigkristallkomponente hinzugefügt wird, um eine optische Rotationspolarisation im Gegenuhrzeigersinn zu haben.

**10.** Flüssigkristallvorrichtung nach Anspruch 1, **dadurch gekennzeichnet**, daß die zweite Richtung eine Richtung ist, welche durch Änderung der ersten Richtung von etwa 90 ° erhalten wird.

**11.** Flüssigkristallvorrichtung nach Anspruch 1, **dadurch gekennzeichnet**, daß das Paar von Polarisationsplatten (19, 20) so angeordnet ist, daß die Polarisationsachsen davon fast parallel zueinander sind.

**12.** Flüssigkristallvorrichtung nach Anspruch 1, **dadurch gekennzeichnet**, daß wenigstens eine der Polarisationsplatten (19, 20) so angeordnet ist, daß eine Polarisationsachse davon fast senkrecht oder parallel zur ersten Richtung ist.

**13.** Flüssigkristallvorrichtung nach Anspruch 1, **dadurch gekennzeichnet**, daß das nematische Flüssigkristallmaterial (18) ein dielektrisches Verhältnis von $\Delta\epsilon$ / $\epsilon\perp$ von 0,31 bis 0,51 und ein Verhältnis der elastischen Konstanten von $K_{33}$ / $K_{11}$ von weniger als 0,8 hat.

## Revendications

**1.** Dispositif à cristal liquide comprenant :

un premier substrat (11) sur lequel sont disposées en rangée une multiplicité de premières électrodes (14) ;

un second substrat (12) disposé de manière à être séparé dudit premier substrat (11) par une distance prédéterminée et comportant au moins une seconde électrode (15) disposée de manière à être opposée auxdites premières électrodes (14) ;

un premier dispositif d'alignement (16) pour aligner les axes des molécules de cristal liquide dans une première direction ;

un second dispositif d'alignement (17) pour aligner les axes des molécules de cristal liquide dans une seconde direction ;

un matériau à cristal liquide nématique (18) disposé entre lesdits premier (16) et second (17) dispositifs d'alignement, et aligné par torsion par alignement des forces de régulation desdits premier et second dispositifs d'alignement ;

une paire de plaques de polarisation (19, 20) disposées respectivement sur les surfaces externes desdits premier (11) et second (12) substrats,

la transmission étant contrôlée par l'application d'une tension aux bornes desdites premières et secondes électrodes,

ledit second dispositif d'alignement (17) aligne les molécules de cristal liquide dans la seconde direction, ladite seconde direction étant différente de la première direction et étant spécifiée par rapport à la première direction par un angle prédéterminé dans une première direction de rotation, et

ledit matériau à cristal liquide nématique (18) ayant un état aligné par torsion dans une direction de rotation égale à ladite première direction de rotation, et les molécules de cristal liquide dudit matériau à cristal liquide nématique étant alignées dans un état aligné par évasement,

ledit premier dispositif d'alignement (16) étant disposé sur une surface dudit premier substrat (11) sur laquelle sont formées lesdites premières électrodes (14) et couvrant lesdites premières électrodes (14) ;

ledit second dispositif d'alignement (17) étant disposé sur une surface dudit second substrat (12) sur laquelle sont formées lesdites secondes électrodes (15) et couvrant lesdites secondes électrodes (15) ;

caractérisé en ce que ledit matériau à cristal liquide nématique (18) a un rapport diélectrique $\Delta\epsilon/\epsilon\perp$ qui ne dépasse pas 0,8 comme rapport de l'anisotropie diélectrique $\Delta\epsilon$ à la constante diélectrique $\epsilon\perp$ dans la direction perpendiculaire à l'axe des molécules de cristal liquide et a un rapport de constantes élastiques $K_{33}/K_{11}$ qui ne dépasse pas 1,0 comme rapport d'une constante élastique $K_{33}$ à une constante élastique d'évasement $K_{11}$ et il est prévu des dispositifs d'étanchéité (13) destinés à adhérer auxdits premier (11) et second (12) substrats qui doivent être séparés par la distance prédéterminée et à enfermer hermétiquement ledit matériau à cristal liquide nématique entre lesdits premier et second substrats.

**2.** Dispositif à cristal liquide selon la revendication 1, caractérisé en ce que ledit matériau à cristal liquide (18) a un retard $\Delta n.d/\lambda$ de 0,8 à 1,5 représenté par une valeur obtenue en divisant le produit $\Delta n.d$ de l'anisotropie optique $\Delta n$ et de l'épaisseur d d'une couche de cristal liquide par la longueur d'onde $\lambda$ de la lumière incidente.

**3.** Dispositif à cristal liquide selon la revendication 1, caractérisé en ce que ledit matériau à cristal liquide (18) a un rapport diélectrique $\Delta\epsilon/\epsilon\_\bot$ compris entre 0,3 et 0,63.

**4.** Dispositif à cristal liquide selon la revendication 1, caractérisé en ce que lesdits premier et second dispositifs d'alignement (16,17) comprennent des films d'alignement pour aligner les molécules de cristal liquide (m) adjacentes sous un angle d'inclinaison $\theta$ qui ne dépasse pas 5°.

**5.** Dispositif à cristal liquide selon la revendication 4, caractérisé en ce que ledit angle d'inclinaison $\theta$ ne dépasse pas 3°.

**6.** Dispositif à cristal liquide selon la revendication 4, caractérisé en ce que lesdits films d'alignement (16,17) comprennent des films de revêtement constitués par un polymère organique.

**7.** Dispositif à cristal liquide selon la revendication 6, caractérisé en ce qu'une surface de chacun desdits films de revêtement (16,17) constitués par le polymère organique est soumise à un ponçage pour présenter une directivité dans une direction.

**8.** Dispositif à cristal liquide selon la revendication 1, caractérisé en ce que la seconde direction est une direction obtenue en modifiant la première direction dans le sens des aiguilles d'une montre d'un angle prédéterminé par rapport à une direction de propagation de la lumière ; et
ledit matériau à cristal liquide (18) est additionné d'un composé à cristal liquide chiral dextrogyre pour présenter une polarisation tournant optiquement dans le sens des aiguilles d'une montre.

**9.** Dispositif à cristal liquide selon la revendication 1, caractérisé en ce que la seconde direction est une direction obtenue en modifiant la première direction en sens inverse des aiguilles d'une montre d'un angle prédéterminé par rapport à une direction de propagation de la lumière ; et
ledit matériau à cristal liquide (18) est additionné d'un composé à cristal liquide chiral lévogyre pour présenter une polarisation tournant optiquement en sens inverse des aiguilles d'une montre.

**10.** Dispositif à cristal liquide selon la revendication 1, caractérisé en ce que la seconde direction est une direction obtenue en modifiant la première direction d'environ 90°.

**11.** Dispositif à cristal liquide selon la revendication 1, caractérisé en ce que les deux plaques de polarisation (19,20) sont disposées de manière que leurs axes de polarisation soient sensiblement parallèles entre eux.

**12.** Dispositif à cristal liquide selon la revendication 1, caractérisé en ce que l'une au moins desdites plaques de polarisation (19,20) est disposée de manière que son axe de polarisation soit sensiblement perpendiculaire ou parallèle à la première direction.

**13.** Dispositif à cristal liquide selon la revendication 1, caractérisé en ce que ledit matériau à cristal liquide nématique (18) a un rapport diélectrique $\Delta\epsilon/\epsilon\_\bot$ compris entre 0,31 et 0,51 et un rapport de constantes élastiques $K_{33}/K_{11}$ inférieur à 0,8.

**FIG.1A**
*(PRIOR ART)*

**FIG.1B**
*(PRIOR ART)*

**FIG.2** *(PRIOR ART)*

EP 0 352 792 B1

**FIG.3**

DIRECTION OF LIGHT

**FIG.4 A**

DIRECTION OF LIGHT

**FIG.4 B**

**FIG. 5**

**FIG.6**

FIG.7

DIRECTION OF LIGHT

**26**

**F**

ψ

**T**

**25**

## FIG.8A

DIRECTION OF LIGHT

**27**

**28**

## FIG.8B